# EUROPEAN PATENT APPLICATION

(11) **EP 3 675 020 A1**
(43) Date of publication of application: **01.07.2020**
(21) Application number: 19191014.0
(22) Date of filing: 09.08.2019
(51) Int. Cl.: G06Q 30/06

(54) **DISTRIBUTION SERVICE PROVIDING METHOD CONNECTING INITIAL PROVIDER AND BUYER VIA MID-DISTRIBUTION MAN**

(30) Priority: 24.12.2018 KR 20180168056
(71) Applicant: Oh, Chung Heon, Busan (KR)
(72) Inventor: Oh, Chung Heon, Busan (KR)
(74) Representative: RGTH

(57) **Abstract**

Provided is a distribution service providing method, which includes collecting and storing order data when an initial provider terminal receives the order data containing order or service request through online from a buyer terminal, transmitting, such that, when being connected, a mid-distribution terminal outputs the order data so as to perform delivery or service to a buyer address of the buyer terminal to be performed based on the stored order data, controlling to transmit a delivery tracking or a service order event to the buyer terminal when the mid-distribution terminal generates order data of delivery or service, and to enable monitoring, and updating state data with regard to the order data into a processing completion when goods or service corresponding to the order or service request is received at the buyer terminal.

## Description

### BACKGROUND OF THE INVENTION

### Field of the invention

The disclosure relates to a distribution service providing method connecting an initial provider and a buyer via a mid-distribution man, and provides a method in which order of consumer can be processed via a mid-distribution man even when a producer has no distribution network or does not spend high cost of advertisement.

### Related Art

When an initial provider, which may a first company or an individual supplying services or consumer goods, launching a new product, if a brand awareness is not created yet, the advertisement should be performed to improve the brand awareness. However, since the advertisement costs a lot of money, the initial provider most often tries to distribute his or her unrecognized goods efficiently by using an established distribution network of an independent middle man, while providing commission to the independent middle man. At this time, the most problematic thing to the independent middle man is a direct transaction through online or the like. That is, if the customer orders directly to a producer through telephone or online, the independent middle man cannot receive commission for distribution in spite of the fact that the introduction or advertisement of goods has been performed through the distribution network established by the independent middle man.

At this time, a most common method of connecting a producer and a consumer is to connect through the mediation of a shopping mall. With regard to this, Korean Patent Application No. 10-2007-0042515 (published on April 23, 2007), one of prior arts, discloses a configuration which registers manufacturing/enterprises, SOHO distribution enterprises, and SOHO trade enterprises as enterprise members, provides commodities, and manages the sales record of the commodities, and which, if a member is a shopping-mall founder, a sideline-person, an operator of personal store, a SOHO distribution enterprise, or a SOHO trade enterprise, assigns a free retail-client shopping mall to the member, such that the member sells commodities at retail in the client shopping mall, performs the shopping mall management, registers commodities as regular commodities to be sold in the client shopping mall, and assigns lower client shopping malls to others.

However, even if using the above-mentioned configuration, the independent middle man still has worry for possibility of directly accessing the producer through online. Meanwhile, in areas where there is no independent middle man, the initial provider will sell goods or provide services directly. However, such initial provider cannot sell goods manufactured by the initial provider, because the initial provider has no middle man. Thus, in some cases, the initial provider suffers from no cash flow, or, in the worst case, a default on bills, which in turn leads to bankruptcy. Therefore, the initial provider will need the independent middle man, and the independent middle man is required to develop a method of eliminating a risk factor that he or she cannot receive proper commission for the provision of the distribution network he or she has established.

### SUMMARY OF THE INVENTION

By providing one embodiment of the disclosure, the producer can reduce costs cooperating with a mid-distribution man at a reasonable commission, and distribute manufactured goods using the established distribution network, while, because the producer's email or order is automatically forwarded to an interface for a mid-distribution man, the mid-distribution man can prevent non-payment of commission from becoming fraud, embezzlement, and breach of trust, and can exclude a situation in which he or she does not receive a commission, so that he or she can provide the service with confidence. Further, it is possible to provide a platform on which rightful reward for using the service can be paid by or to a corresponding participant. However, the technical problem which is addressed by the exemplary embodiment is not limited to the technical problem described above, and may include other technical problems.

An embodiment of the disclosure includes collecting and storing order data when an initial provider terminal receives the order data containing order or service request through online from a buyer terminal, transmitting, such that, when being connected, a mid-distribution terminal outputs the order data so as to enable delivery or service to a buyer address of the buyer terminal to be performed based on the stored order data, controlling to transmit a delivery tracking or a service order event to the buyer terminal when the mid-distribution terminal generates order data of delivery or service, and to enable monitoring, and updating state data with regard to the order data into a processing completion when goods or service corresponding to the order or service request is received at the buyer terminal.

### BRIEF DESCRIPTION OF THE DRAWINGS

FIG. 1 is a drawing explaining a distribution service providing system connecting an initial provider and a buyer via a mid-distribution man according to an example of the disclosure.
FIG. 2 is a block diagram explaining a distribution service providing server included in the system of FIG. 1.
FIG. 3 is a drawing explaining an example in which a distribution service connecting an initial provider and a buyer via a mid-distribution man according to an example of the disclosure is implemented.
FIG. 4 is a diagram illustrating a procedure in which data is transmitted and received between respective components included in a distribution service providing system connecting an initial provider and a buyer via mid-distribution of FIG. 1 according to an example of the disclosure.
FIG. 5 is a flow chart explaining a distribution service providing method connecting an initial provider and a buyer via a mid-distribution man according to an example of the disclosure.

### DESCRIPTION OF EXEMPLARY EMBODIMENTS

As used herein, "connecting" a part with another part may refer to a case where they are "electrically connected" to each other with other element intervening therebetween, as well as a case where they are directly connected. Further, when a part "includes" a component, it means not that the part excludes other component, but instead that the part may further include other component unless expressly stated to the contrary, and it should be also understood that presence or addition of one or more other features, numbers, steps, actions, components, parts or combinations thereof is not excluded in advance.

Wherever used throughout the disclosure and claims, the terms "about", "approximate", "substantial" and the like are used in the sense of being at or being close to a numerical value when an inherent manufacture and material tolerances are offered, and they are also intended to prevent an unconscientious infringer from unfairly using disclosure in which correct or absolute numerical value is stated to facilitate understanding of the invention. The term, "(∼ing) step" or "step of" does not mean "step for".

In the disclosure, a 'unit' includes a unit realized by a hardware, a unit realized by a software, and a unit realized by the both. In addition, one unit may be realized by two or more hardwares, and two or more units may be realized by a single hardware.

In the disclosure, some of actions or functions performed by a terminal, an apparatus or a device may be performed instead by a server to which the terminal, the apparatus or the device is connected. Likewise, some of actions or functions performed by a server may be performed instead by a terminal, an apparatus or a device which are connected to the server.

In the disclosure, some of actions or functions described as being mapped or matched with a terminal may be interpreted as being mapped or matched with a unique number of the terminal, i.e., identifying data of a terminal, or personal identifying number.

Hereinafter, embodiments of the disclosure will be described with reference to the accompanying drawings.

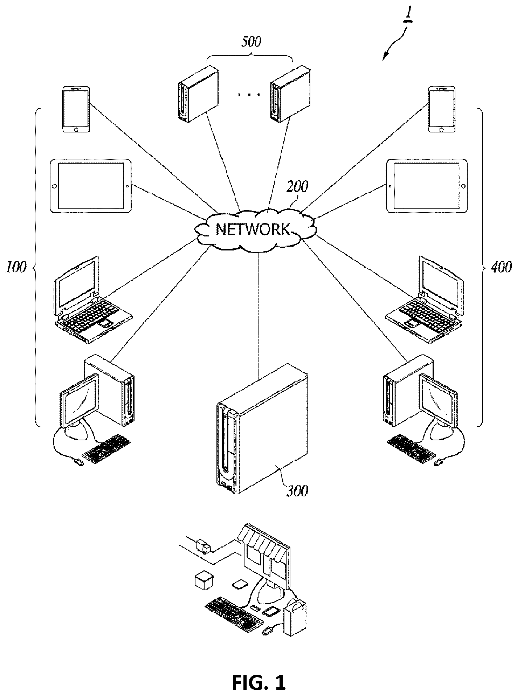

FIG. 1 is a drawing explaining a distribution service providing system connecting an initial provider and a buyer via a mid-distribution man according to an example. Referring to FIG. 1, the distribution service providing system 1 connecting an initial provider and a buyer via an independent middle man may include at least one buyer terminal 100, a distribution service providing server 300, at least one initial provider terminal 400, and at least one mid-distribution terminal 500. However, the distribution service providing system connecting an initial provider and a buyer via a mid-distribution man of FIG. 1 is just an example of the disclosure, and thus the present invention should not be construed as being limited through FIG. 1.

The components of FIG. 1 are generally connected to each other respectively through a network 200. For example, as shown in FIG. 1, the at least one buyer terminal 100 may be connected to the distribution service providing server 300, the initial provider terminal 400, and the mid-distribution terminal 500 through the network 200. And, the distribution service providing server 300 may be connected to the at least one buyer terminal 100, the at least one initial provider terminal 400, the at least one mid-distribution terminal 500 through the network 200. Additionally, the at least one initial provider terminal 400 may be connected to the buyer terminal 100, the distribution service providing server 300, and the mid-distribution terminal 500 through the network 200. And, the at least one mid-distribution terminal 500 may be connected to the at least one buyer terminal 100, the distribution service providing server 300, and the at least one initial provider terminal 400 through the network 200.

Herein, the network means a connecting structure capable of exchanging information between respective nodes, such as a plurality of terminals and servers, and an example of the network may include, but not be limited to, RF, a 3rd Generation Partnership Project (3GPP) network, a Long Term Evolution (LTE) network, a 5rd Generation Partnership Project (5GPP) network, a World Interoperability for Microwave Access (WIMAX) network, Internet, Local Area Network (LAN), Wireless Local Area Network (Wireless LAN), Wide Area Network (WAN), Personal Area Network (PAN), a Bluetooth network, a Near Field Communication (NFC) network, a satellite broadcasting network, an analog broadcasting network, a Digital Multimedia Broadcasting (DMB) network and the like.

Hereinafter, the term 'at least one' is defined as a term including a singular number and a plural number, and it is obvious that even if there is no term 'at least one', each component may exist singularly or plurally and may mean being singular or plural. Further, according to an exemplary embodiment, each component may be included singularly or plurally.

The at least one buyer terminal 100 may be a buyer terminal which purchases goods or requests a service of the initial provider terminal 400 using a web page, an app page, a program or an application relating to a distribution service connecting an initial provider and a buyer via an independent middle man. Alternatively, the at least one buyer terminal 100 may be a buyer terminal which orders goods or requests a service directly on a page provided at the initial provider terminal 400. At this time, if the distribution service providing server 300 may operate in linkage with the initial provider terminal 400 to be incorporated into a sub-component of the initial provider terminal 400, the distribution service providing server 300 may be used as an online shopping mall and a path connecting the mid-distribution man with a buyer, and thus the purchase of goods of the buyer terminal 100 from the service providing server 300 is not a direct transaction. It is also obvious that methods of requesting goods or a service are not limited to the description above and may exist variously.

Herein, the at least one buyer terminal 100 may be embodied by a computer capable of connecting to a remote server or a terminal via a network. Herein, for example, the computer may include a navigation, a notebook, a desktop, a laptop and the like, which are loaded with a web browser. At this time, the at least one buyer terminal 100 may be embodied by a terminal capable of connecting to a remote server or terminal via a network. For example, the at least one buyer terminal 100 may include as a wireless communication apparatus securing portability and mobility, a handheld-based wireless communication apparatus, such as a navigation, a personal communication system (PCS), a global system for mobile communications (GSM), a personal digital cellular (PDC), a personal handyphone system (PHS), a personal digital assistant (PDA), IMT(lnternational Mobile Telecommunication)-2000, CDMA(Code Division Multiple Access)-2000, W-CDMA(W-Code Division Multiple Access), a Wibro (Wireless Broadband Internet) terminal, a smartphone, a smartpad, a tablet PC and the like.

The distribution service providing server 300 may be a server which provides a web page, an app page, a program or an application relating to a distribution service connecting an initial provider and a buyer via an independent middle man. And, the distribution service providing server 300 may be a server which, when the order data is input directly or indirectly from the buyer terminal 100, stores and uploads the order data, so that the mid-distribution terminal 500 can check the order data at the GUI for mid-distribution. And, before the step described above is performed, when the order data is transmitted to the initial provider terminal 400 from the orderer terminal 100, the distribution service providing server 300 may automatically set the initial provider terminal 400 to directly forward an order mail to the mid-distribution terminal 500 or the distribution service providing server 300 may directly forward the mail to the mid-distribution terminal 500. And, the distribution service providing server 300 may be a server which, when the mid-distribution terminal 500 connects to a page provided at the distribution service providing server 300, enables the confirmation of the order data of the buyer terminal 100 received at the initial provider terminal 400, and which proceeds the order processing procedure by converting the state into an order confirmed state upon the confirmation of the order data. And, the distribution service providing server 300 may be a server which finishes the order processing procedure, and settles the commission to the mid-distribution terminal 500, when the buyer terminal 100 generates an event that the goods or service has been received. At this time, the commission may be paid in a form of advance payment, deferred payment, deposit or the like, while variously dividing the amount of money or time, besides the method described above.

Herein, the distribution service providing server 300 may be embodied by a computer capable of connecting to a remote server or terminal via a network. Herein, for example, the computer may include a navigation, a notebook, a desktop, a laptop and the like, which are loaded with a web browser.

The at least one initial provider terminal 400 may be a terminal of an initial provider who uses a web page, an app page, a program or an application relating to a distribution service connecting an initial provider and a buyer via an independent middle man. At this time, the at least one initial provider terminal 400 may be a terminal which, when the order data is received from the buyer terminal 100, automatically forwards the order data as an email to the mid-distribution terminal 500 and transmits it to the distribution service providing server 300, and which enables the mid-distribution terminal 500 to connect to the distribution service providing server 300 and confirm the order after that. And, the at least one initial provider terminal 400 may be a terminal which, when it is confirmed from the distribution service providing server 300 that the order processing has been completed, calculates in a way of settling the commission of a predetermined ratio or predetermined amount of money to the mid-distribution terminal 500.

Herein, the at least one initial provider terminal 400 may be embodied by a computer capable of connecting to a remote server or terminal via a network. Herein, for example, the computer may include a navigation, a notebook, a desktop, a laptop and the like, which are loaded with a web browser. At this time, the at least one initial provider terminal 400 may be embodied by a terminal capable of connecting to a remote server or terminal via a network. For example, the at least one initial provider terminal 400 may include as a wireless communication apparatus securing portability and mobility, a handheld-based wireless communication apparatus, such as a navigation, a personal communication system (PCS), a global system for mobile communications (GSM), a personal digital cellular (PDC), a personal handyphone system (PHS), a personal digital assistant (PDA), IMT(lnternational Mobile Telecommunication)-2000, CDMA(Code Division Multiple Access)-2000, W-CDMA(W-Code Division Multiple Access), a Wibro (Wireless Broadband Internet) terminal, a smartphone, a smartpad, a tablet PC and the like.

The at least one mid-distribution terminal 500 may be a terminal which takes charge of distribution between an initial provider and a buyer using a web page, an app page, a program or an application relating to a distribution service connecting an initial provider and a buyer via an independent middle man. At this time, the at least one mid-distribution terminal 500 may be a terminal which confirms the order data from the email received from the initial provider terminal 400, determines whether the provision of goods is proceeded by itself or the initial provider, confirms the receipt of the order by connecting to the GUI for mid-distribution provided at the distribution service providing server 300, changes the proceeding state with regard to the order data into completion, and requests the settlement to the initial provider terminal 400. At this time, the at least one mid-distribution terminal 500 may be a terminal of a distributor which takes charge of logistics and distribution in a country different from that of the initial provider terminal 400. Of course, it is obvious that taking charge in same country is not excluded.

Herein, the at least one mid-distribution terminal 500 may be embodied by a computer capable of connecting to a remote server or terminal via a network. Herein, for example, the computer may include a navigation, a notebook, a desktop, a laptop and the like, which are loaded with a web browser. At this time, the at least one mid-distribution terminal 500 may be embodied by a terminal capable of connecting to a remote server or terminal via a network. For example, the at least one mid-distribution terminal 500 may include as a wireless communication apparatus securing portability and mobility, a handheld-based wireless communication apparatus, such as a navigation, a personal communication system (PCS), a global system for mobile communications (GSM), a personal digital cellular (PDC), a personal handyphone system (PHS), a personal digital assistant (PDA), IMT(lnternational Mobile Telecommunication)-2000, CDMA(Code Division Multiple Access)-2000, W-CDMA(W-Code Division Multiple Access), a Wibro (Wireless Broadband Internet) terminal, a smartphone, a smartpad, a tablet PC and the like.

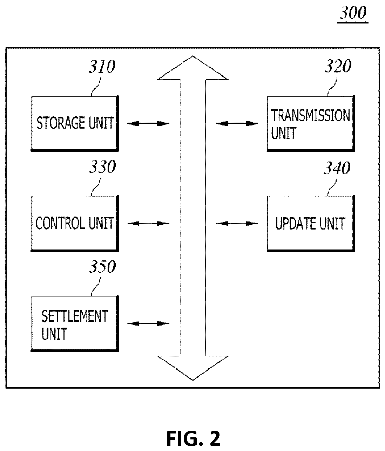

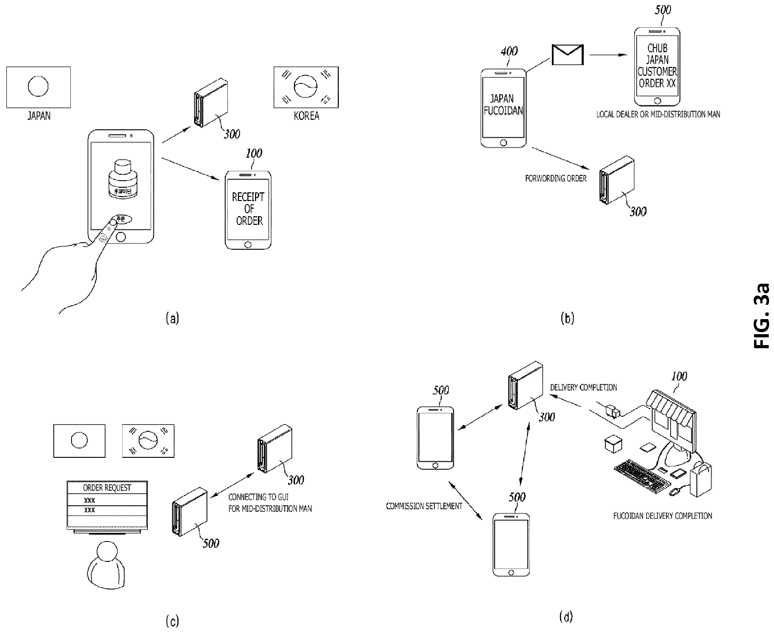

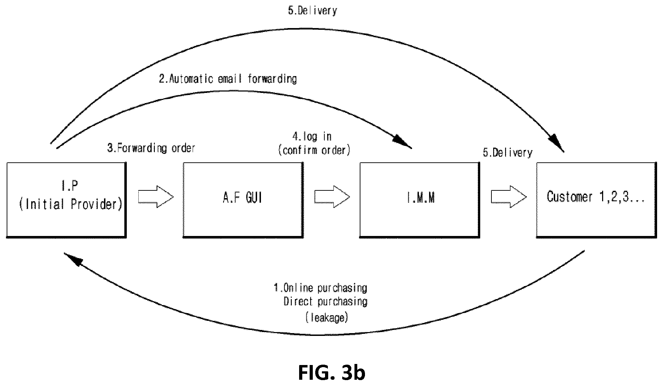

FIG. 2 is a block diagram for explaining a distribution service providing server included in the system of FIG. 1, and FIG. 3 is a drawing for explaining an example in which a distribution service connecting an initial provider and a buyer via an independent middle man in accordance with an example is embodied.

Referring to FIG. 2, the distribution service providing server 300 may include a storage unit 310, a transmission unit 320, a control unit 330, update unit 340, a settlement unit 350.

When the distribution service providing server 300 or other server operating in linkage with it transmits to the at least one buyer terminal 100, the at least one initial provider terminal 400, and the at least one mid-distribution terminal 500, a distribution service application, program, app page, web page or the like, which connects an initial provider and a buyer via an independent middle man, the at least one buyer terminal 100, the at least one initial provider terminal 400, and the at least one mid-distribution terminal 500 may install or make it executable. Additionally, the service program may be run at the at least one buyer terminal 100, the at least one initial provider terminal 400, and the at least one mid-distribution terminal 500, using scripts executed on web browser. Herein, the web browser means a program which enables use of web (WWW: world wide web) service, and which receives and displays hyper texts, and includes Netscape, Explorer, Chrome and the like. Further, the application means an application program on a terminal, and includes an app which is executed on a mobile terminal (smartphone).

Referring to FIG. 2, the storage unit 310 may store the order data when the initial provider terminal 400 receives the order data containing order or service request through online from the buyer terminal 100. At this time, the initial provider terminal 400 may be a terminal of an initial provider, a manufacturer or a producer which sells goods to domestic buyers, or which sells and exports goods to foreign buyers. Herein, the orderer may be a retail customer, or an importer who imports goods in great quantities from a foreign country. And, the order data may be received through a homepage, a shopping mall page provided at the initial provider terminal 400, or may be received through a page of the distribution service providing server 300. In a case of the former, immediately after the order data is received at the initial provider terminal 400, the storage unit 310 of the distribution service providing server 300 extracts and automatically forwards it to the mid-distribution terminal 500, and records it thereon, while in a case of later, the email is forwarded to the mid-distribution terminal 500 without a storing process since the data is input directly into the distribution service providing server 300.

Therefore, in a case where the order data is received at the initial provider terminal 400 from the buyer terminal 100 through online, when the order data is corrected and stored, the storage unit 310 may control to automatically forward the email containing the order data received from the buyer terminal 100, from the initial provider terminal 400 to the mid-distribution terminal 500, and may forward or transmit the order data received from the buyer terminal 100, from the initial provider terminal 400 to the GUI for an independent middle man. Since, If the email is sent and purchase order is processed manually, work efficiency would be bad, the storage unit 310 controls the initial provider terminal 400 to filter the order data and transmit the email to the mid-distribution terminal 500 automatically. At this time, the GUI may be an UI which iconizes and visualizes each menu or function to perform each menu or function without a user typing each time.

In a case where the initial provider terminal400 receives the order data containing order or service request through online from the buyer terminal 100, wherein the buyer terminal 100 performs order and settlement through an online page provided at the initial provider terminal400, the storage unit 310 may collect the order data from an initial provider server (not shown) running the online page provided at the initial provider terminal 400 or the initial provider terminal 400 operating in linkage with the online page, when collecting and storing the order data.

The transmission unit 320 may transmit, such that, when being connected, the mid-distribution terminal 500 outputs the order data so as to perform delivery or service to a buyer address of the buyer terminal 100 to be performed based on the stored order data. When the transmission unit 320 transmits, such that, when being connected, the mid-distribution terminal 500 outputs the order data so as to perform delivery or service to a buyer address of the buyer terminal 100 to be performed based on the stored order data, it may proceed order confirmation to change the state of the order data into a state where the mid-distribution terminal 500 has checked the receipt of the order data when a graphical user interface (GUI) for an independent middle man is logged in at the mid-distribution terminal 500. For example, when A company (initial provider) enters a delivery request to B company (mid-distribution man), A company often asks the acknowledgment email to check the receipt of its order, and a person in charge clicks in response to it, worsening the work efficiency. Thus, when an event that the order is output on a screen, is clicked or selected, or a purchase order or invoice is printed or the like Contrary to this, takes place, it is regarded as the check of the order.

The control unit 330 may control to transmit a delivery tracking or a service order event to the buyer terminal 100 when the mid-distribution terminal 500 generates order data of delivery or service, and to enable monitoring. At this time, the country of the buyer terminal 100 may be same as or different form that of the initial provider terminal 400, and when the first country of the buyer terminal 100 is different from the second country of the initial provider terminal 400, the mid-distribution terminal 500 may be a local dealer terminal. Or, it may be a terminal of domestic or foreign dealer taking charge of domestic and foreign distribution.

The update unit 340 may update state data with regard to the order data into a processing completion when goods or service corresponding to the order or service request is received at the buyer terminal 100.

After the update unit 340 has updated state data with regard to the order data into a processing completion when goods or service corresponding to the order or service request is received at the buyer terminal 100, the settlement unit 350 may charge the first provider terminal 400 a commission for delivery or provision of the goods or service periodically or in real time upon the receipt of the goods or service, and may complete calculation when an amount of money corresponding to the charged commission is settled from the initial provider terminal to the mid-distribution terminal.

With aforementioned configuration, in the exemplary embodiment, even if an order is received from a final customer to an initial provider without going through a mid-distribution man through online or telephone in any region, the online order or the telephone order will be immediately and automatically notified by email to the mid-distribution man taking charge of the region. In such a case, an agent, the mid-distribution man, does not need to be concerned about people who use his or her distribution network and intend not to pay commission, and thus may advertise and sell goods with an easy mind. The mid-distribution man may check the orders that have been sent directly to the initial provider in his or her region, on a daily basis through the interface of the GUI for mid-distribution man, and may determine whether his or her goods or service is delivered to customers by itself or by the initial provider. According to this, if the mid-distribution man delivers the goods or service to the final customer, the initial provider shall give entire money for the order received through online or telephone, to the mid-distribution man in a form of credit. The reason thereof is that the mid-distribution man has already bought the goods from the initial provider. If the mid-distribution man asked the initial provider to deliver the goods, margin calculated by subtracting cost of the goods or service at which the mid-distribution man buys, from the amount of money received through online or telephone would be provided to the mid-distribution man. However, it is clear that this configuration may be modified according to some embodiments because it is not a patent configuration but a policy configuration.

Herein, the distribution service providing server 300 according to the disclosure may perform market segmentation using information on accumulated buyers, mid-distribution and the like, and may process and provide to the initial provider the information, so that it can be utilized in marketing. At this time, market segmentation is a core concept in a marketing field for attracting new customers or increasing satisfaction of current customers by helping a company to further understand customers. The selection of the segmentation variable which is the criteria for market segmentation is critical for successful market segmentation, and the segmentation variables can be largely divided into a general variable and a transaction based variable. The market segmentation study using general variable classifies customers using basic customer properties such as population statistics characteristics, lifestyles, attitudes, and psychology, and enables differentiated marketing for them, and the transaction based variable includes customer value-oriented attributes such as customer purchasing behavior, customer potential, life-time value, and the like. In the exemplary embodiment, a hybrid variable using two methods may be used. Of course, it is not excluded to use each, aggregation or combination thereof. The hybrid variable enables comparison of buying patterns between customer groups using goods purchase information while at the same time clearly segmenting the market on the basis of the general variable.

To do this, first, selection of customer variable for market segmentation and status of attribution values which the selected variable has are defined, customer segments are configured according to the selected customer variable and the status definition of each variable, the similarity of buying patterns is compared between the configured customer segments, respective customer segments are integrated using a clustering algorithm, the number into which the market is segmented through the integration result evaluation is determined, and the final market segmentation criteria may be drawn. At this time, the similarity between goods networks of each customer segment may be calculated using a Quadratic Assignment Procedure (QAP) correlation coefficient, which is pearson correlation coefficient stretched and applied to a network, and which is a method of checking how much connections among entities in two networks configured of same entities are associated with each other over the two networks. Through this process, the similarity of buying patterns between respective customer segments can be obtained.

Further, integration of segments may be performed using a hierarchical agglomerative clustering method, which is a method of repeatedly performing a process of integrating two groups into one according to connecting method from a single group based on distance between measurements (customer segments) until entire measurements are combined into one group. And through the hierarchical agglomerative clustering process, the number of groups decreases sequentially from the number of customer segments to one, wherein step-by-step integration may be checked via a dendrogram in the form of a hierarchical tree, and a decision-makers determining market segmentation should finally select the number of groups of the appropriate level through the dendrogram. At this time, the number of selected groups is the final number of segmented markets. Thus, once the number of markets is selected, the segmentation criteria for the market may be drawn using the customer variables and their attributes of the customer segments included in each market. Of course, the transmission of marketing information to the initial supplier terminal 400 is not limited to the methods described above and it is not excluded to use various analysis methods.

Further, a distribution services according to an exemplary embodiment of the disclosure may provide a category management system (CMS) to enhance the business results of mid-distribution man. At this time, the category management system manages the pricing, merchandising, promotion, and product mix of a category by setting a goal for a category which is based on each business unit and considering competitive and consumer purchasing behavior to satisfy customer needs, and it is defined as a process in which distributors and providers manage categories as strategic business units, so that business results are improved to create value for consumers. At this time, CMS may be defined as a system in which distributors and providers cooperatively manage to efficiently operate product mix, product price, display and promotion by setting as a category unit a group of goods and services that consumers can recognize in a view of the Supply Chain Management (SCM).

Meanwhile, the components for constructing and implementing the CMS may include six interrelated components in total, which may be divided into two core components and four support elements. Among the components of CMS, the strategy and business processes are included in the core components, and the scorecard and organizational capacity, information technology, the cooperative relationship between trading partners are included in the support components. Herein, a category management strategy means a strategic selection of organizing and guiding categories as a business unit, and the process means the sequence, methodology, and procedures for taking responsibility of the daily tasks and activities required to achieve the strategy. Further, the support components include measurement tools such as scorecards, roles and responsibilities of the organization structure and organizational support capabilities of the compensation system, IT infrastructure supporting decision making, and cooperative relationships based on trust. These six components are applied to both distributors and providers in common, but when applying these components specifically, overlapping parts and other parts appear differently according to the organizational characteristics.

The CMS may be referred to as a general product management system that efficiently manages assortment of goods, pricing, display and promotion, and supplement control by setting goods groups sold through online stores on the basis of category which customers can identify. If a company operates CMS efficiently, it can sufficiently reflect the market value required by its customers to the store, and a collaborative goods management process with many providers may be further established. Particularly, since CMS in domestic retail distributors plays a role encompassing business functions such as logistics, distribution, marketing and the like, it is known that market-oriented characteristics that can acquire market-related information including consumers and competitors, and actively respond to consumers' needs must be possessed. Therefore, in the disclosure, CMS service can be provided to serve as a local dealer by performing this role on the mid-distribution terminal 500, and if purchased directly by the purchaser through online, it is possible to manage assortment of goods, pricing, display and promotion on online using CMS.

Meanwhile, the distribution service providing server (300) according to an example of the disclosure may accumulate and store the purchase and distribution data, may perform preprocessing including refining and classifying into meta data, unstructured, structured, and semi-structured data contained within the stored raw data, and may carry out analysis including data mining of the preprocessed data. And, the distribution service providing server 300 can visualize and output the analyzed data. At this time, data mining may explore the inherent relationships between preprocessed data and perform clustering to group data based on similarity without classification or class information, in which by learning a set of training data whose class is known, a class of new data is anticipated. Of course, various different mining methods may exist, and may be mined differently according to the type of big data that is collected and stored, or the type of query that will be requested afterwards. The big data constructed in this way may be subjected to a verification process by deep-learning of artificial neural networks, machine learning or the like.

At this time, as an artificial neural network, a convolutional neural network (CNN)structure may be used, because CNN is a network structure using a convolution layer, is suitable for image processing, and can classify images based on characteristics within the image using image data input. Further, text mining is a technology of extracting and processing useful information based on natural language processing technology from non/semi-structured text data. Text mining techniques may extract meaningful information from a vast bunch of text, identify connections with other information, find out a category that text has, and obtain results more than just searching for information. By using this, in the distribution service according to an example of the disclosure, large-scale linguistic resources and statistical and regular algorithms may be used to analyze the identifiers or natural languages input as inquiries and to discover the information hidden in them. Further, cluster analysis may be used to eventually discover groups of similar characteristics, while combining bodies of similar characteristics.

Hereinafter, the operation process according to the configuration of the distribution service providing server of FIG. 2 will be described in detail, referring to FIG. 3 as an example. However, the example is one of various examples of the disclosure, and it is obvious that the invention is not limited thereto.

Referring to FIG. 3A, in a case where order is made at the buyer terminal 100 to the initial provider terminal 400 directly or via the distribution service providing server 300 (FIG. 3A(a)), the distribution service providing server 300 has the email forwarded from the initial provider terminal 400 to the mid-distribution terminal 500, and has the order stored therein and output in the GUI for mid-distribution later (FIG. 3A(b)). At this time, since the distribution service providing server 300 stores the order data in itself, when the stored order data is checked at the mid-distribution terminal 500, the distribution service providing server 300 treats it as the order confirmation (FIG. 3A(c)); and after the delivery has been completed, the initial provider terminal 300 mediates between the initial provider terminal 400 and the mid-distribution terminal 500 to settle commission for the delivery completion (FIG. 3A(d)). This process is briefly illustrated in order in FIG. 3B, and the description thereof will be omitted as it is identical to that of FIG. 3A.

With regard to FIGS. 2 and 3, the detailed description for the configurations of the distribution service providing method connecting an initial provider and a buyer via a mid-distribution man, which are similar or identical, or easily inferred from the description of the distribution service providing method connecting an initial provider and a buyer via a mid-distribution man of FIG. 1, will be omitted.

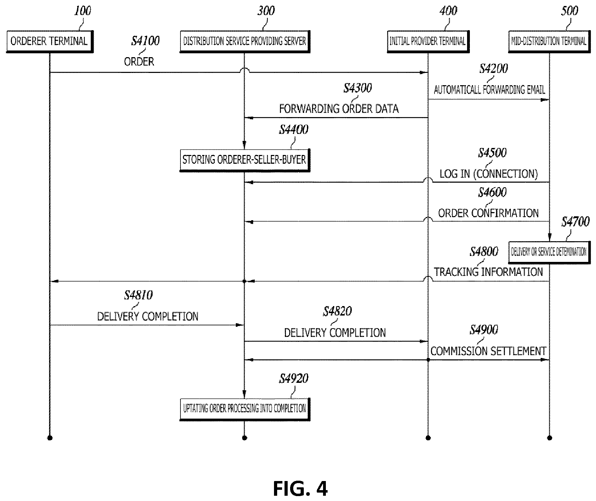

FIG. 4 is a diagram illustrating a process in which data is transmitted between components included in a distribution service providing system connecting an initial provider and a buyer via mid-distribution of FIG. 1 according to an example of the disclosure. Hereinafter, while an example of process in which data is transmitted and received between respective components will be described through FIG. 4, the subject application is not construed as being limited to such example, and it is obvious to a person having an ordinary skill in the art that the process of transmitting and receiving data shown in FIG. 4 may be modified according to various examples described above.

Referring to FIG. 4, the initial provider terminal 400 receives the order from the orderer terminal 100 (S4100), and then automatically forwards the order data via email to the mid-distribution terminal 500 (S4200), and forwards the order data to the distribution service providing server 300 (S4300).

At this time, the distribution service providing server 300 maps and stores the order, the initial provider, and the buyer (S4400), and, when the mid-distribution terminal 500 logs in and connects to a page provided at the distribution service providing server 300 and an event that each order data is selected takes place (S4500), the distribution service providing server 300 may map the order with the order confirmation (S4600). Then, the delivery or service is determined at the mid-distribution terminal 500 (S4700), the tracking information is received from the mid-distribution terminal 500 (S4800), and the delivery completion event takes place at the orderer terminal 100 (S4810). After that, the distribution service providing server 300 compels commission settlement between the initial provider terminal 400 and the mid-distribution terminal 500 (S4900), and changes and updates state of the order data into processing completion after the commission settlement has been executed (S4920).

The order of steps (S4100 to S4920) described above is just an example, and is not limited thereto. That is, the order of steps described above (S4100 to S4920) may be changed, and some of the steps may be executed at the same time or removed.

With regard to FIG. 4, the detailed description for the configurations of the distribution service providing method connecting an initial provider and a buyer via a mid-distribution man, which are similar or identical, or easily inferred from the description of the distribution service providing method connecting an initial provider and a buyer via a mid-distribution man of FIGS. 1 to 3, will be omitted.

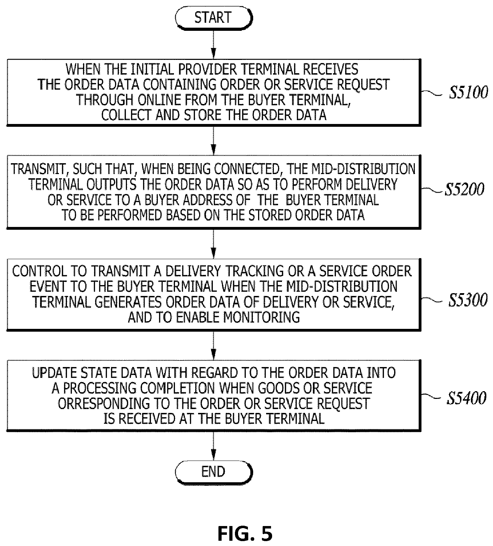

FIG. 5 is a flow chart explaining a distribution service providing method connecting an initial provider and a buyer via a mid-distribution man in accordance with an example of the disclosure. Referring to FIG. 5, when the initial provider terminal receives the order data containing order or service request through online from a buyer terminal, the distribution service providing server collects and stores the order data (S5100).

And, the distribution service providing server transmits, such that, when being connected, the mid-distribution terminal outputs the order data so as to perform delivery or service to a buyer address of the buyer terminal to be performed based on the stored order data (S5200); and controls to transmit a delivery tracking or a service order event to the buyer terminal when the mid-distribution terminal generates order data of delivery or service, and to enable monitoring (S5300).

Herein, the distribution service providing server updates state data with regard to the order data into a processing completion when goods or service corresponding to the order or service request is received at the buyer terminal (S5400).

With regard to FIG. 5, the detailed description for the configurations of the distribution service providing method connecting an initial provider and a buyer via a mid-distribution man, which are similar or identical, or easily inferred from the description of the distribution service providing method connecting an initial provider and a buyer via a mid-distribution man of FIGS. 1 to 4, will be omitted.

The distribution service providing method connecting an initial provider and the buyer via a mid-distribution man according to an example described through FIG. 5 may be embodied in a form of recording medium containing commands executable by a computer, such as an application or program module executed by a computer. The computer readable medium may be an arbitrary available medium which is able to be accessed by a computer, and may include a volatile or non-volatile medium, and a separable or non-separable medium. Further, the computer readable medium may include a computer storage medium. The computer storage medium may include the volatile or non-volatile medium, and the separable or non-separable medium implemented using an arbitrary method or technology for storing information such as a computer readable command, a data structure, a program module, or other data.

The distribution service providing method connecting an initial provider and a buyer via a mid-distribution man according to an example of the disclosure described above may be executed by an application (which may include a platform basically mounted on the terminal or a program included in an operating system) basically installed at the terminal, and may be executed by an application, i.e., a program, which a user installs directly at a master terminal via an application providing server such as an application store server, a web server relating to an application or corresponding service. According to this, the distribution service providing method connecting an initial provider and a buyer via a mid-distribution man according to an example described above may be embodied by an application, i.e., a program, which is installed at a terminal basically or directly by a user, and may be recorded at a computer-readable recording medium.

The afore-mentioned description of the disclosure is just an example, and a person having an ordinary skill in the art may understand that it can be easily modified into other specific configuration without changing the technical spirit or essential features of the invention. Thus, the embodiments described above should be construed as exemplary in every aspect and not limiting. For example, the respective components described as singular forms may be implemented by being distributed, and the respective components described as being distributed may be implemented by being coupled.

The scope of the disclosure is defined by the following claims rather than the detailed description, and all modifications derived from the meaning and scope of the claims and equivalents thereto or modified forms should be interpreted as being included in the scope of the disclosure.

With the above exemplary embodiments of the disclosure, the producer can reduce costs cooperating with a mid-distribution man at a reasonable commission, and distribute manufactured goods using the established distribution network, while, because the producer's email or order is automatically forwarded to an interface for mid-distribution man, the mid-distribution man can prevent non-payment of commission from becoming fraud, embezzlement, and breach of trust, and can exclude a situation in which he or she does not receive a commission, so that he or she can provide the service with confidence. Further, it is possible to provide a platform on which rightful reward for using the service can be paid by or to a corresponding participant.

## Claims

1. A distribution service providing method, which is executed on a distribution service providing server, the method comprising:
collecting and storing order data when an initial provider terminal receives the order data containing order or service request through online from a buyer terminal;
transmitting, such that, when being connected, a mid-distribution terminal outputs the order data so as to perform delivery or service to a buyer address of the buyer terminal to be performed based on the stored order data;
controlling to transmit a delivery tracking or a service order event to the buyer terminal when the mid-distribution terminal generates order data of delivery or service, and to enable monitoring; and
updating state data with regard to the order data into a processing completion when goods or service corresponding to the order or service request is received at the buyer terminal,
wherein the transmitting, such that, when being connected, a mid-distribution terminal outputs the order data so as to perform delivery or service to a buyer address of the buyer terminal to be performed based on the stored order data includes:
proceeding order confirmation to change the state of the order data by checking the receipt of the order data when a graphical user interface (GUI) for an independent middle man is logged in at the mid-distribution terminal, wherein the order confirmation is proceeded to automatically change the state of the order data by regarding occurrence of an event including outputting on a screen, clicking or selecting the order data , or printing the order or invoice as checking the receipt of the order data, and
wherein when the initial provider terminal receives the order data containing order or service request through online from the buyer terminal, the collecting and storing of the order data includes:
collecting the order data from an initial provider server operating an online page including a homepage, a shopping mall page and provided at the initial provider terminal, or from the initial provider terminal operating in linkage with the online page when order and settlement are performed through the online page.

2. The method of claim 1, wherein countries of the buyer terminal and the initial provider terminal are identical to or different from each other, and
wherein if the first country of the buyer terminal and the second country of the initial provider terminal are different from each other, the mid-distribution terminal is a local dealer terminal, or a domestic or foreign dealer terminal.

3. The method of claim 1, further comprising:
after the updating of the state data with regard to the order data into a processing completion when goods or service corresponding to the order or service request is received at the buyer terminal,
charging the first provider terminal a commission for delivery or provision of the goods or service periodically or in real time upon the receipt of the goods or service, wherein the commission of a predetermined ratio or the commission of a predetermined amount money is charged; and
completing calculation when an amount of money corresponding to the charged commission is settled from the initial provider terminal to the mid-distribution terminal.

4. The method of claim 1, wherein when the initial provider terminal receives the order data containing order or service request through online from the buyer terminal, the collecting and storing of the order data is executed by performing:
controlling to automatically forward from the initial provider terminal to the mid-distribution terminal an email including the order data received from the buyer, and
forwarding from the initial provider terminal the order data received from the buyer terminal so as to be transmitted to a graphical user interface (GUI) for an independent middle man, in which each menu or function is iconized or visualized.
